## Europäisches Patentamt
## European Patent Office
## Office européen des brevets

(19)

(11) Veröffentlichungsnummer: **0 080 178**
**B1**

(12)

# EUROPÄISCHE PATENTSCHRIFT

(45) Veröffentlichungstag der Patentschrift:
**19.09.84**

(21) Anmeldenummer: **82110681.2**

(22) Anmeldetag: **19.11.82**

(51) Int. Cl.³: **B 29 B 1/06,** B 29 D 27/02

---

(54) **Mischkopf.**

---

(30) Priorität: **25.11.81 DE 8134274 U**

(43) Veröffentlichungstag der Anmeldung:
**01.06.83 Patentblatt 83/22**

(45) Bekanntmachung des Hinweises auf die Patenterteilung:
**19.09.84 Patentblatt 84/38**

(84) Benannte Vertragsstaaten:
**DE FR GB IT NL SE**

(56) Entgegenhaltungen:
**DE - B - 2 612 812**

(73) Patentinhaber: **Elastogran Maschinenbau GmbH & Co.,**
**Mitterstrassweg, D-8021 Strasslach vor München (DE)**

(72) Erfinder: **Holzer, Gerhard, Bruggspergerstrasse 13,**
**D-8000 Muenchen 90 (DE)**

(74) Vertreter: **Springer, Hans Jörg, Dr. et al,**
**Carl-Bosch-Strasse 38, D-6700 Ludwigshafen (DE)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf einen Mischkopf nach dem Oberbegriff des Patentanspruchs.

Bekannte Vorrichtungen der vorstehend genannten Art (DE-B-2-2 612 812) sind so aufgebaut, daß die einzelnen Baugruppen, wie Vorratsbehälter, Dosieraggregate, Hydraulikeinheit, Temperiereinheiten u. dgl. an einem Maschinengestell befestigt sind, das lediglich die Aufgabe hat, diese Bauteile zu tragen. An dem Maschinengestell ist auch der Mast angeordnet, an dem ein Ausleger schwenkbar befestigt wird, an dessen Ende der Mischkopf sitzt. Zu diesem Mischkopf führen die Schlauchleitungen von den Dosieraggregaten und von der Hydraulikeinheit. Für jede Kunststoffkomponente sowie ggf. für das Einbringen von Zuschlagstoffen ist jeweils ein Dosieraggregat vorgesehen, dem die Komponente üblicherweise mit einem gewissen Vordruck, beispielsweise durch Druckbeaufschlagung des Vorratsbehälters, zugeführt wird. Bei dieser Mengenregulierung mittels Behältervordruck reichern sich jedoch die Komponenten mit Luft an, welche sich im Dosieraggregat sammelt. Dies führt dazu, daß ein einwandfreies Dosieren der Produktströme nicht mehr gewährleistet ist, und die Dosieraggregate in reglmäßigen Abständen über entsprechende Einrichtungen manuell entlüftet werden müssen.

Es war daher Aufgabe der Erfindung, eine Vorrichtung der eingangs genannten Art zu schaffen, die von den geschilderten Mängeln frei ist und insbesondere einen hohen Gleichförmigkeitsgrad in der Förderung der Komponenten besitzt.

Diese Aufgabe wird durch die kennzeichnenden Merkmale des Patentanspruchs gelöst.

Die Entlüftungseinrichtung ist derart aufgebaut und angeordnet, daß der Dosier- und Mischvorgang nicht behindert wird. Es können Kunststoffkomponenten mit den unterschiedlichsten Eigenschaften, beispielsweise solche mit unterschiedlichen Viskositäten, über einen praktisch beliebigen Zeitraum exakt dosiert und damit vorgegebene Mengen und Mischungsverhältnisse genau eingehalten werden. Das Druckniveau in der Entlüftungsleitung wird dabei gegenüber dem der Rücklaufleitung im allgemeinen 0,5 bis 2 bar niedriger. Die Druckdifferenz wird durch eine in einem Bypass angeordnete Flüssigkeitsstrahlpumpe erzeugt, wobei parallel zur Flüssigkeitsstrahlpumpe ein Rückschlagventil in der Rücklaufleitung vorgesehen ist. Dadurch daß die Flüssigkeitsstrahlpumpe an die Rücklaufleitung angeschlossen ist, wird automatisch beim Betrieb des Dosieraggregats ein geringeres Druckniveau erzeugt. Die Druckdifferenz zwischen Entlüftungsleitung und Rücklaufleitung ist aufgrund des Rückschlagventils, welches erst gegen einen bestimmten Druck öffnet, weitgehend unabhängig von der Förderleistung des Dosieraggregats.

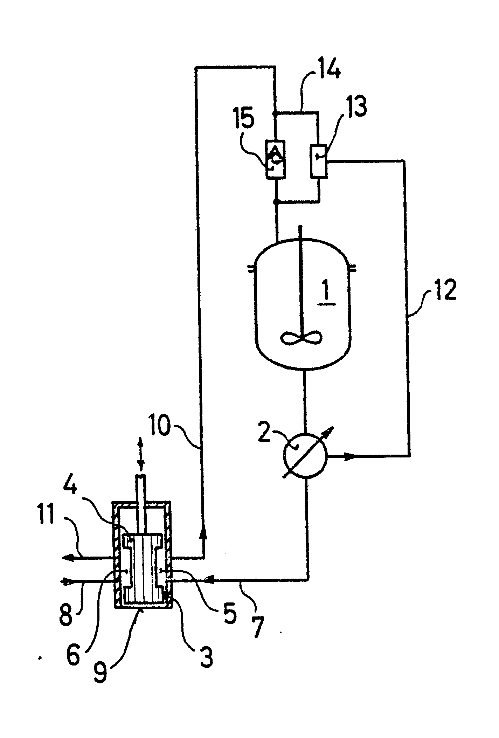

Im folgenden wird die Erfindung unter Hinweis auf die Zeichnung anhand eines Ausführungsbeispiels näher erläutert.

Die im Vorratsbehälter 1 befindliche Kunststoffkomponente wird mittels eines Dosieraggregats 2, z. B. mittels einer Axialkolbenpumpe, in die Mischkammer 3 gefördert, in der ein Steuerorgan 4 hin- und herbewegbar ist. Das Steuerorgan ist mit einer Längsnut 5, 6 für jede Komponente ausgerüstet.

In die Mischkammer 3 führen zwei Eintrittsöffnungen 7 und 8. Mit 9 ist die Austrittsöffnung für das Komponentengemisch bezeichnet. In Schließstellung sind die Eintrittsöffnungen über Längsnuten 5 und 6 in dem Steuerorgan 4 mit Rücklaufleitungen 10 und 11 verbunden. In dieser Stellung werden die Kunststoffkomponenten nicht miteinander vermischt, sondern zurück in den Vorratsbehälter 1 gefördert. Der Vorratsbehälter für die andere Komponente ist zur Vereinfachung der zeichnerischen Darstellung nicht gezeigt.

Die Komponente in dem Vorratsbehälter 1 ist unter einem bestimmten Vordruck gelagert. Ein Rührer ist angedeutet. Um zu vermeiden, daß sich in dem Dosieraggregat 2 die bei der Förderung der Komponente mitgeführte Luft ansammelt, ist an das Dosieraggregat 2 auf seiner Saugseite eine Entlüftungsleitung 12 angeschlossen. Die Entlüftungsleitung 12 führt zu einer Flüssigkeitsstrahlpumpe 13 in einem Bypass 14 der Rücklaufleitung 10. Parallel zur Flüssigkeitsstrahlpumpe 13 ist ein Rückschlagventil 15 in der Rücklaufleitung 10 vorgesehen. Somit ist sichergestellt, daß unabhängig von der Dosierleistung der Pumpe (Dosieraggregat 2) eine in etwa gleichbleibende Komponentenmenge durch die Flüssigkeitsstrahlpumpe 13 läuft und folglich das Druckgefälle konstant bleibt.

## Patentanspruch

Mischkopf zum Vermischen von mindestens zwei miteinander reagierenden flüssigen Kunststoffkomponenten, mit einem Dosieraggregat (2) für jede Kunststoffkomponente und einer Mischkammer (3), die Eintrittsöffnungen (7, 8) für die einzelnen Komponenten und eine Austrittsöffnung (9) für das Komponentengemisch sowie ein Steuerorgan (4) aufweist, durch das die Eintrittsöffnungen (7, 8) synchron mit ihrer Trennung von der Mischkammer (3) mit Rücklaufleitungen (10, 11) verbindbar sind, dadurch gekennzeichnet, daß an das Dosieraggregat (2) auf seiner Saugseite eine Entlüftungsleitung (12) angeschlossen, die Entlüftungsleitung (12) mit der entsprechenden Rücklaufleitung (10, 11) verbunden und in der Entlüftungsleitung (12) gegenüber der Rücklaufleitung (10, 11) ein niedrigeres Druckniveau einstellbar ist, wobei die Druckdifferenz durch eine in einem Bypass (14) der Rücklaufleitung (10, 11) angeordnete Flüssigkeitsstrahlpumpe (13) erzeugt wird und wobei parallel zur Flüssigkeitsstrahlpumpe (13) ein Rückschlagventil (15) in der Rücklaufleitung (10, 11) vorgesehen ist.

## Claim

A mixing head for mixing at least two inter-reacting, liquid plastics components, comprising metering means (2) for each liquid plastics component and a mixing chamber (3) which has inlets (7, 8) for the individual components and an outlet (9) for the mixture of components, as well as a control member (4), by means of which the inlets (7, 8) can be connected to recycle lines (10, 11) synchronously with their being shut off from the mixing chamber (3), wherein a venting line (12) is connected to the suction side of the metering means (2); the venting line (12) is connected to the recycle line (10, 11) concerned; and a pressure which is lower than in the recycle line (10, 11) can be set up in the venting line (12), the difference in pressure being produced by a liquid jet pump (13) arranged in a bypass (14) of the recycle line (10, 11), and a check valve (15) being arranged in the recycle line (10, 11), parallel to the liquid jet pump (13).

## Revendication

Tête de mélange pour mélanger au moins deux composés de matière plastique fluides réagissant entre eux, comprenant un agrégat de dosage (2) pour chaque composé de matière plastique et une chambre de mélangeage (3), présentant des ouvertures d'entrée (7, 8) pour les composés individuels et une ouverture de sortie (9) pour le mélange des composés ainsi qu'un organe de commande (4), par lequel les ouvertures d'entrée (7, 8) en synchronisme avec leur séparation de la chambre de mélangeage (3), peuvent être raccordées à des conduites de retour (10, 11), caractérisée par le fait qu'une conduite de désaération (12) est raccordée à l'agrégat de dosage (2) du côté d'aspiration, la conduite de désaération (12) est raccordée à la conduite de retour correspondante (10, 11) et un niveau de pression plus bas que dans la conduite de retour (10, 11) peut être établi dans la conduite de désaération (12), la différence de pression étant produite par un injecteur de fluide (13) disposé dans un bypass (14) de la conduite de retour (10, 11) et une soupape de retenue (15) étant disposée dans la conduite de retour (10, 11) en parallèle sur l'injecteur de fluide (13).